# EUROPEAN PATENT SPECIFICATION

(11) **EP 3 266 139 B1**
(45) Date of publication and mention of the grant of the patent: **05.12.2018**
(21) Application number: 15711326.7
(22) Date of filing: 03.03.2015
(51) Int. Cl.: H04L 5/00, H04W 72/12

(54) **SHARING OF A PUCCH RESOURCE AMONG COMMUNICATION DEVICES USING DIFFERENT PERIODICITY PATTERNS**
GEMEINSAME NUTZUNG EINER PUCCH-RESSOURCE UNTER KOMMUNIKATIONSVORRICHTUNGEN MIT VERWENDUNG VERSCHIEDENER PERIODIZITÄTSMUSTER
PARTAGE D'UNE RESSOURCE DE PUCCH ENTRE DISPOSITIFS DE COMMUNICATION UTILISANT DES MODÈLES DE PÉRIODICITÉ DIFFÉRENTS

(43) Date of publication of application: 10.01.2018
(73) Proprietor: Telefonaktiebolaget LM Ericsson (publ), 164 83 Stockholm (SE)
(72) Inventor: BERGQUIST, Gunnar, S-164 45 Kista (SE); BETTER, David, S-187 36 Täby (SE); RASK, Patrik, S-191 43 Sollentuna (SE)
(74) Representative: Zacco Sweden AB
(86) International application number: PCT/SE2015/050239
(87) International publication number: WO 2016/140601

(56) References cited:
- WO-A1-2012/141625
- ERICSSON: "Subframe scheduling for half-duplex FDD UE demodulation performance", 3GPP DRAFT; R4-144877_LOWCOMPLEXUE_HDFDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Dresden, Germany; 20140818 - 20140822 17 August 2014 (2014-08-17), XP050799446, Retrieved from the Internet: URL:http://www.3gpp.org/ftp/Meetings_3GPP_ SYNC/RAN4/Docs/ [retrieved on 2014-08-17]
- ERICSSON ET AL: "SR prohibit timer (R2-097263)", 3GPP DRAFT, no. #68, 9 November 2009 (2009-11-09), XP050390919, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE [retrieved on 2009-11-13] cited in the application

## Description

### TECHNICAL FIELD

The present disclosure generally relates to radio communication. More particularly, this disclosure relates to a method performed by, or otherwise executed in, a network node for using a single Physical Uplink Control Channel (PUCCH) resource to a plurality of communication devices such that the plurality of communication devices can share the single PUCCH resource. The disclosure also presents a corresponding network node as well as a computer program and a carrier.

### BACKGROUND

Radio communication networks are widely deployed to provide various communication services such as telephony, video, data, messaging, broadcasts, and so on. Such communication networks support communications for multiple user equipment (UE) by sharing the available network resources. One example of such a network is the Universal Mobile Telecommunications System (UMTS), a third generation (3G) mobile phone technology standardized by the 3rd Generation Partnership Project (3GPP). UMTS includes a definition for a Radio Access Network (RAN), referred to as UMTS Terrestrial Radio Access Network (UTRAN). The UMTS, which is the successor to Global System for Mobile Communications (GSM) technologies, supports various air interface standards, such as Wideband-Code Division Multiple Access (W-CDMA), Time Division-Code Division Multiple Access (TD-CDMA), and Time Division-Synchronous Code Division Multiple Access (TD-SCDMA). The UMTS also supports enhanced 3G data communications protocols, such as High Speed Packet Access (HSPA), which provides higher data transfer speeds and capacity to associated UMTS networks. As the demand for mobile broadband access continued to increase, research and development continued to advance the UMTS technologies not only to meet the growing demand for mobile broadband access, but to advance and enhance the user experience with mobile communications. For example, third-generation UMTS based on W-CDMA has been deployed in many places the world. To ensure that this system remains competitive in the future, the 3GPP therefore began a project to define the long-term evolution of the UMTS technology. The specifications related to this effort are formally known as Evolved UMTS Terrestrial Radio Access (E-UTRA) and Evolved UMTS Terrestrial Radio Access Network (E-UTRAN), but are more commonly referred to by the name Long Term Evolution (LTE). More detailed descriptions of radio communication networks and systems can be found in literature, such as in Technical Specifications published by, e.g., the 3GPP.

In LTE, a physical uplink control channel (PUCCH) is typically used for conveying uplink control information, such as for example channel quality indication (CQI) and uplink scheduling requests (SRs). A communication device, sometimes also referred to as UE, generally has two ways of notifying a base station (typically denoted evolved NodeB or eNB in LTE) that is has data to transmit. The communication device may have a PUCCH scheduling resource for scheduling requests (SR), and in such case it may simply use this PUCCH scheduling resource to send the scheduling request to the base station thus notifying that the communication device has data to transmit. The scheduling request can be seen as a simple flag (e.g., a single bit) and there is generally no need to provide the identity of the communication device since this is implicitly known from the identity of the PUCCH scheduling resource on which the scheduling request was sent. The second way for a communication device to send a scheduling request, if the communication device does not have a PUCCH scheduling resource, is to instead perform a random access (RA) procedure. The 3GPP LTE standard thus supports the communication device having a PUCCH scheduling resource or the communication device using a RA procedure for the scheduling request. However, in order for all communication devices to have a scheduling resource it may be necessary to use a large portion of the available physical resource blocks (PRB) for PUCCH, which in turn limits the number of PRBs that would be available for traffic data.

The RA procedure may sometimes be inadequate. Firstly, the use of RA procedure typically entails more messaging between the communication device and the base station, which may increase the delay before the communication device is scheduled for data transmission. Secondly, the processing load in the base station for handling the RA procedures may be higher than for handling scheduling requests on PUCCH. Using RA procedures thus generally means that the base station would have to be optimized for a higher RA load, which in turn entails higher costs for processing capacity.

Further, in practice, the amount of available scheduling resources limits the number of users that can be handled in a communication system with low delay. Further, since the scheduling resources typically form a bottleneck, the base station generally needs to reserve scheduling resources for prioritized communication devices, e.g. emergency calls. This may add to the complexity of the scheduling resource handling functionality of the base station.

In view of the above discussion, it is thus appreciated that the PUCCH resources are limited and used at the expense of traffic resources. Also, it is appreciated that the alternative, i.e. using RA procedures, entails longer delays for the user before being granted access.

In view of this, there is a need for an improvement of this situation. WO2012/141625A1 has therefore suggested the sharing of a single resource block (PRB) resource block between two or more user equipment in order to enable faster grant of scheduling requests for user equipment while maximizing the available user data traffic. Furthermore, WO2013/159830A1 has suggested data transmissions using a shared uplink control channel resource in order to efficiently maintaining a connection to multiple user equipment.

### SUMMARY

It is in view of the above considerations and others that the various embodiments described in this disclosure have been made.
More particularly, it is a general object of the embodiments described herein to provide an improved way of identifying the communication devices when a single PUCCH resource is to be shared among a plurality of communication devices.

This general object has been addressed by the appended independent claims.

The invention is defined by the appended independent claims. Advantageous embodiments are defined in the appended dependent claims.
According to a first aspect, there is provided a method performed by, or otherwise executed in, a network node (e.g., a eNodeB) for using a single PUCCH resource to a plurality of communication devices (e.g., UEs) such that the plurality of communication devices can share the single PUCCH resource.

A transmission mask is assigned to each one of a plurality of communication devices such that different transmission masks are assigned to different communication devices. Furthermore, each transmission mask indicates re-occurring transmission occasions at which each communication device is either allowed or disallowed to transmit SRs to the network node. Accordingly, a SR periodicity pattern is thereby defined for each one of the plurality communication devices. Moreover, a burst of SRs is received from at least one (i.e., one or several) communication device. Still further, the at least one communication device from which the burst of SRs was received is identified by recognizing the SR periodicity pattern of the received burst of SRs. Also, an uplink (UL) grant may be transmitted to the identified at least one communication device, i.e. the at least one communication device from which the burst of SRs was received.

In some embodiments, a list of communication device identities and a SR periodicity pattern associated with each one of the communication device identities are stored. The SR periodicity pattern of the received burst of SRs may be compared with the stored SR periodicity patterns. The identity of the at least one communication device from which the burst of SRs was received may for example be determined in response to finding a match between the SR periodicity pattern of the received burst of SRs and one of the stored SR periodicity patterns.

In advantageous embodiments, a prohibit timer value is associated to each one of the plurality of communication devices such that different prohibit timer values are associated with different communication devices. Each prohibit timer value may indicate a duration of time at which each one of the plurality of communication devices is disallowed to transmit SRs. The different prohibit timer values may, for example, be *sr-ProhibitTimer* values.

According to a second aspect, there is provided a computer program. The computer comprises instructions which, when executed on at least one processor, cause the at least one processor to carry out the method according to the first aspect. A carrier comprising the computer program may also be provided. The carrier may for instance be one of an electronic signal, an optical signal, a radio signal, or a computer readable storage medium.

According to a third aspect, there is provided a network node (e.g., a eNodeB) for using a single PUCCH resource to a plurality of communication devices such that the plurality of communication devices can share the single PUCCH resource.

The network node may, for example, comprise means adapted to assign a transmission mask to each one of a plurality of communication devices such that different transmission masks are assigned to different communication devices, each transmission mask indicating re-occurring transmission occasions at which each communication device is either allowed or disallowed to transmit SRs to the network node, whereby a SR periodicity pattern is defined for each one of the plurality communication devices; means adapted to receive a burst of SRs from at least one communication device; and means adapted to identify the at least one communication device from which the burst of SRs was received by recognizing the SR periodicity pattern of the received burst of SRs. Also, the network node may comprise means adapted to transmit an UL grant to the identified at least one communication device from which the burst of SRs was received.

In some embodiments, the network node additionally comprise: means adapted to store a list of communication device identities and a respective SR periodicity pattern associated with each one of the communication device identities, means adapted to compare a SR periodicity pattern of the received burst of SRs with the stored SR periodicity patterns, and means adapted to determine the identity of the at least one communication device from which the burst of SRs was received in response to finding a match between the SR periodicity pattern of the received burst of SRs and one of the stored SR periodicity patterns.

In advantageous embodiments, the network node may also comprise means adapted to associate a prohibit timer value to each one of the plurality of communication devices such that different prohibit timer values are associated with different communication devices, each prohibit timer value indicating a duration of time at which each one of the plurality of communication devices is disallowed to transmit SRs. The different prohibit timer values may e.g. be *sr-ProhibitTimer* values.

Various embodiments described herein allow for a way of identifying the communication devices when a single PUCCH resource is to be shared among a plurality of communication devices. When sharing a single PUCCH resource between two or more communication devices, this identification of the communication devices may in turn enable faster and/or more accurate grants of SRs for communication devices while maximizing the available user data traffic.

### BRIEF DESCRIPTION OF DRAWINGS

These and other aspects, features and advantages will be apparent and elucidated from the following description of various embodiments, reference being made to the accompanying drawings, in which:
Figure 1 illustrates a method performed by a network node supporting the use of a single PUCCH resource, in accordance with an embodiment;
Figure 2 illustrates a method performed by a network node supporting the use of a single PUCCH resource, in accordance with another embodiment;
Figure 3 illustrated an example look-up table;
Figure 4 illustrates an optional action, or method step, of the method in Figure 1 or Figure 2;
Figure 5 illustrates an example of an assigned transmission mask;
Figure 6 illustrates another example of an assigned transmission mask;
Figure 7 illustrates yet another example of an assigned transmission mask;
Figure 8 illustrates still another example of an assigned transmission mask;
Figure 9 illustrates a carrier comprising a computer program, in accordance with an embodiment;
Figure 10 illustrates an example embodiment of a network node supporting the use of a single PUCCH resource; and
Figures 11-12 illustrate different example implementations of a network node supporting the use of a single PUCCH resource.

### DETAILED DESCRIPTION

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements or method steps throughout the description.

Throughout the following detailed description, it should be appreciated that the term communication device is used to mean any device, which can be used by a user to communicate. Also, the term communication device may be referred to as user equipment (UE). A communication device may e.g. be embodied as a mobile terminal, a terminal, a user terminal (UT), a wireless terminal, a wireless communication device, a wireless transmit/receive unit (WTRU), a mobile phone, a cell phone, a computer, a laptop computer, a tablet computer, etc. Yet further, the term communication device includes Machine Type Communication (MTC) devices, which do not necessarily involve human interaction. Also, the term "network node" as used herein generally denotes a fixed point being capable of communicating with the communication device. As such, it may be referred to as a base station, a radio base station, a NodeB or an evolved NodeB (eNB), a Radio Network Controller (RNC), an access point, etcetera.

As described earlier, some existing solutions for sharing a single PUCCH resource between several communication devices may be inadequate. For example, it may be a challenge for the network node to distinguish between the various communication devices. Hence, it may be a challenge for the network node to know which UL grant to transmit to which communication device.

It is therefore a general object of embodiments described herein to provide a way of identifying the various communication devices when a single PUCCH resource is to be shared among a plurality of communication devices.

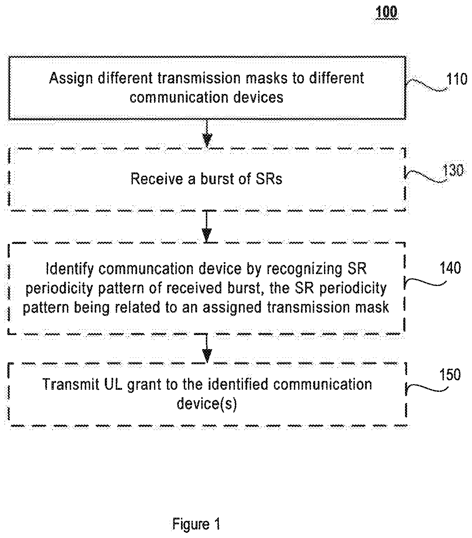

To address this, in accordance with an example, described herein are network node (e.g., a eNodeB) as well as a method 100 performed by the network node for using a single PUCCH resource to a plurality of communication devices such that the plurality of communication devices can share the single PUCCH resource. With reference to figure 1, a transmission mask is assigned 110, or otherwise allocated, to each one of a plurality of communication devices such that different transmission masks are assigned to different communication devices. Each transmission mask is configured to indicate re-occurring transmission occasions at which a communication device in question is either allowed or disallowed to transmit SRs to the network node. Thereby a SR periodicity pattern is defined for each one of the plurality communication devices. If, or when, a burst of SRs is received 130 from at least one communication device, the at least one communication device can be identified 140. For example, the at least one communication device from which the burst of SRs was received 130 can be identified 140 by recognizing the SR periodicity pattern of the received burst of SRs. Also, an UL grant may be transmitted 150 to the identified at least one communication device from which the burst of SRs was received.

This way, it is made possible to distinguish the different communication devices from each other. This can be done by recognizing the SR periodicity patters of received bursts of SRs, wherein these SR periodicity patters have been formed, or defined, by the earlier-assigned transmission masks. This allow for identifying the various communication devices when a single PUCCH resource is to be shared among a plurality of communication devices. In turn, this may enable faster and/or more accurate grants of SRs for communication devices while maximizing the available user data traffic when sharing a single PUCCH resource.

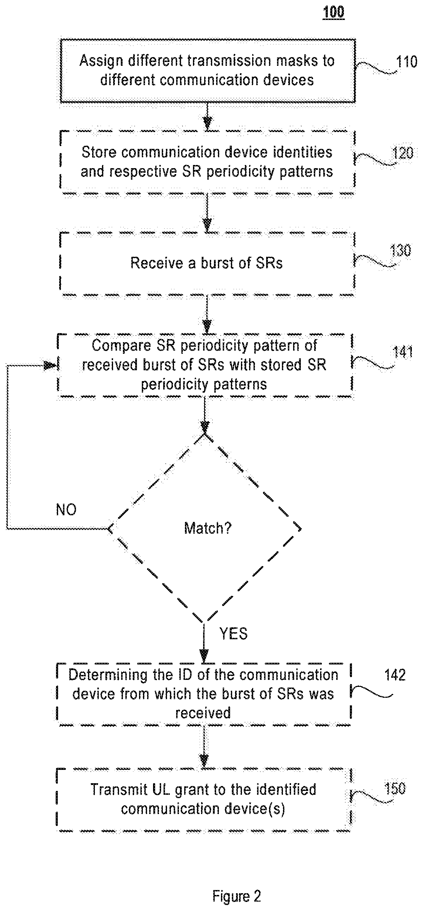

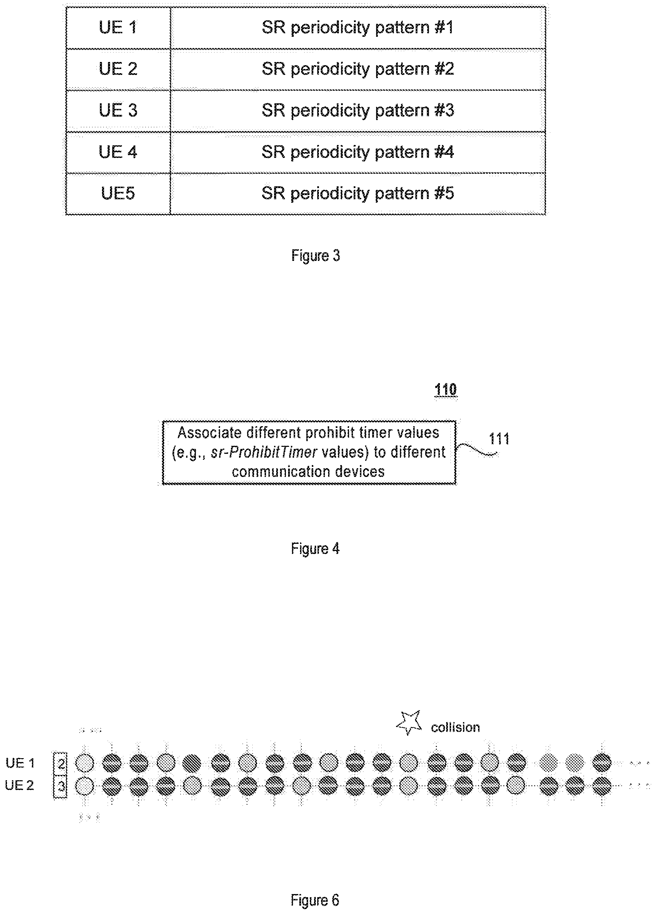

Figure 2 illustrates another example embodiment of a method 100 performed by the network node for using a single PUCCH resource to a plurality of communication devices such that the plurality of communication devices can share the single PUCCH resource. As described with respect to figure 1, a transmission mask is assigned 110 to each one of a plurality of communication devices such that different transmission masks are assigned to different communication devices. Furthermore, a list of communication device identities and a SR periodicity pattern associated with each one of the communication device identities may be stored 120. The list of communication device identities and the SR periodicity pattern associated with each one of the communication device identities may be stored 120 in a look-up table. Figure 3 schematically illustrates one example of a look-up table.

With continued reference to figure 2, the SR periodicity pattern of the received burst of SRs may be compared 141 with the stored SR periodicity patterns, e.g. in the look-up table shown in figure 3. In response to finding a match (cf. YES in figure 2) between the SR periodicity pattern of the received burst of SRs and one of the stored SR periodicity patterns, the identity of the at least one communication device from which the burst of SRs was received may thus be determined 142. In other words, it is possible to identify the at least one communication device from which the burst of SRs was received by recognizing the SR periodicity pattern of the received burst of SRs.

Turning now to figure 4, an advantageous embodiment will be described in further detail. In this embodiment, the assigning 110 of the transmission mask to each of the plurality of communication devices comprises associating 111 (or, allocating) a prohibit timer value to each one of the plurality of communication devices such that different prohibit timer values are associated with different communication devices. Each prohibit timer value indicates a duration of time at which each one of the plurality of communication devices is disallowed to transmit SRs. To this end, the different prohibit timer values may preferably, though not necessarily, be *sr-ProhibitTimer* values. This embodiment recognizes the fact that it has been agreed in the 3GPP to introduce a SR prohibit timer called *sr-ProhibitTimer.* This *sr-ProhibitTimer* did not exist in Release 8 of the LTE standard but was introduced later, in Release 9, of the LTE standard. As can be seen in R2-097263, a Change Request submitted by several companies to the 3GPP TSG-RAN2 Meeting #68 in Jeju, South Korea in November 2009, the reason for introducing the *sr-ProhibitTimer* was a concern about unnecessary many SR transmissions. In contrast, this embodiment is based on the notion that a prohibit timer value such as the *sr-ProhibitTimer* may also be used when sharing a single (most likely, scarce) PUCCH resource. This will now be explained in more detail.

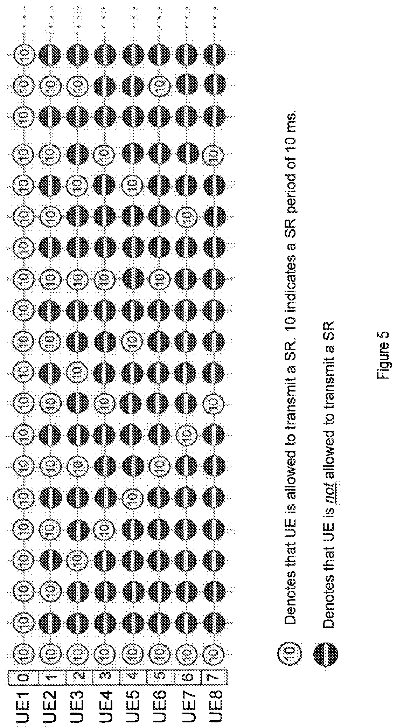

Figure 5 illustrates an example where eight different transmission masks are assigned 110 to eight different communication devices denoted from UE1-UE8. More particularly, different prohibit timer values in the form of *sr-ProhibitTimer* values (e.g., 0-7) are associated 111, or allocated, to each one of the plurality of communication devices UE1-U8. Figure 5 thus illustrates how different *sr-ProhibitTimer* values 0-7 can be used to create, or otherwise define, certain SR periodicity patters by prohibit the communication devices from transmitting SRs at different occasions. In this example, a SR period during which a certain UE is allowed to transmit a SR is set to 10 milliseconds (ms). In other embodiments, this SR period may e.g. be 1, 2, 5, 20, 40 or 80 ms. As is known among persons skilled in the relevant art, the SR period during which a certain communication device is allowed to transmit a SR is typically 10-20 ms. The shorter 1 ms, 2 ms and 5 ms, respectively, are generally used for services with critical latency requirements whereas the longer 40 ms and 80 ms, respectively, can be used for services with more relaxed latency requirements.

With continued reference to figure 5, it can be seen that a first communication device UE1 is allowed to transmit SRs (sometimes also referred to as Dedicated SRs, D-SR, in the following) at all occasions, where each transmission occasion has a duration of 10 ms. Furthermore, a second communication device UE2 is prohibited (thus, disallowed) to transmit SRs at every second occasion. Still further, a third communication device UE3 is disallowed to transmit SRs at every third occasion, and so forth. As can be seen, different *sr-ProhibitTimer* values are associated with the different communication devices such that a unique SR periodicity pattern is formed, or defined, for each one of the eight communication devices UE1 to UE8. The thus defined SR patterns may be stored 120, for example in a look-up table such as the look-up table illustrated in figure 3. For example, a first column of the look-up table can indicate the identity of the communication devices and a second column of the look-up table can indicate the SR periodicity patterns. In each row of the look-up table, an identity of a communication device can be associated, or otherwise linked, with its respective SR periodicity pattern.

Turning now to figure 6, a further example will be described. In this example, the *sr-ProhibitTimer* is used to make, or establish, a split of the D-SR opportunities belonging to a PUCCH resource. Figure 6 illustrates an example with two communication devices, UE1 and UE2. The first communication device UE1 is configured with a *sr-ProhibitTimer* value of 2 and the second communication device UE2 is configured with a *sr-ProhibitTimer* value of 3. Thus, UE1 is disallowed to transmit SRs at every third occasion whereas UE2 is disallowed to transmit SRs at every fourth occasion. This means that the network node may recognize that UE1 transmits SRs at occasions 1, 4, 7, 10, 13, 16, 19, etc. Also, the network node may recognize that UE2 transmits SRs at occasions 1, 5, 9, 13, 17, etc. As can be seen in figure 6, there exist some potential collision occasions, see e.g. occasions 1 and 13. However, since the network node receives 130 a burst of SRs and may identify 140 the communication device in question based on the SR periodicity patterns (i.e., recognizing the pattern of several transmission occasions), it is generally possible to distinguish between the different communication devices, e.g. UE1 and UE2 in this example, even if a few collisions may occur between certain communication devices and at certain transmission occasions.

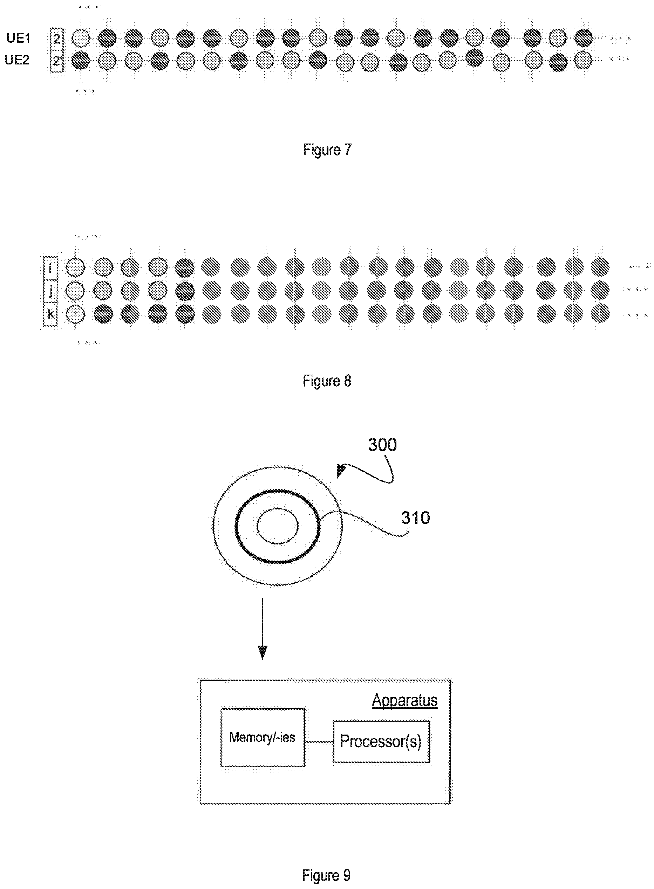

Figure 7 illustrates yet another example. Figure 7 illustrates an example with two communication devices, UE1 and UE2. In this example, a *sr-ProhibitTimer* value and the inverse of the *sr-ProhibitTimer* value are associated with a respective communication device. For example, the first communication device UE1 may be configured with a *sr-ProhibitTimer* value of 2 and the second communication device UE2 is configured with the inverse *sr-ProhibitTimer* value of 2'. This means that the network node may recognize that UE1 transmits SRs at occasions 1, 4, 7, 10, 13, 16, 19, etc. Also, the network node may recognize that UE 2 transmits SRs at occasions 2, 3, 5, 6, 8, 9, 11, 12, 14, 15, 17, 18, 20 etc. In other words, the SR periodicity pattern of UE2 becomes the inverse of the SR periodicity pattern of UE1. This example may be advantageous in that it allows for no collision occasions.

Figure 8 illustrates yet another example. Figure 8 illustrates an example with three communication devices, where the three communication devices have been associated with three different *sr-ProhibitTimer* values i, j, k to form different SR periodicity patterns. In some embodiments, the different *sr-ProhibitTimer* values i, j, k may be chosen randomly to form different, and thus random, SR periodicity patterns. In other embodiments, the different *sr-ProhibitTimer* values may be predefined to form SR periodicity patterns that may be particularly useful for certain services, e.g. for certain services having certain latency requirements.

Turning now to figure 9, another embodiment will be briefly discussed. Figure 9 shows an example of a computer-readable medium, in this example in the form of a data disc 300. In one embodiment the data disc 300 is a magnetic data storage disc. The data disc 300 is configured to carry instructions 310 that can be loaded into at least one memory of an apparatus, e.g. a network node. Upon execution of said instructions by at least one processor of the apparatus, the apparatus is caused to execute a method or procedure according to the embodiments described hereinabove with respect to figures 1 through 8. The data disc 300 is arranged to be connected to or within and read by a reading device (not shown), for loading the instructions into the at least one processor. One such example of a reading device in combination with one (or several) data disc(s) 300 is a hard drive. It should be noted that the computer-readable medium can also be other mediums such as compact discs, digital video discs, flash memories or other memory technologies commonly used. In such an embodiment the data disc 300 is one type of a tangible computer-readable medium. The instructions may alternatively be downloaded to a computer data reading device, such as a computer or other apparatus capable of reading computer coded data on a computer-readable medium, by comprising the instructions in a computer-readable signal (not shown) which is transmitted via a wireless (or wired) interface (for example via the Internet) to the computer data reading device for loading the instructions into the at least one processor of the apparatus. In such an embodiment, the computer-readable signal is one type of a non-tangible computer-readable medium.

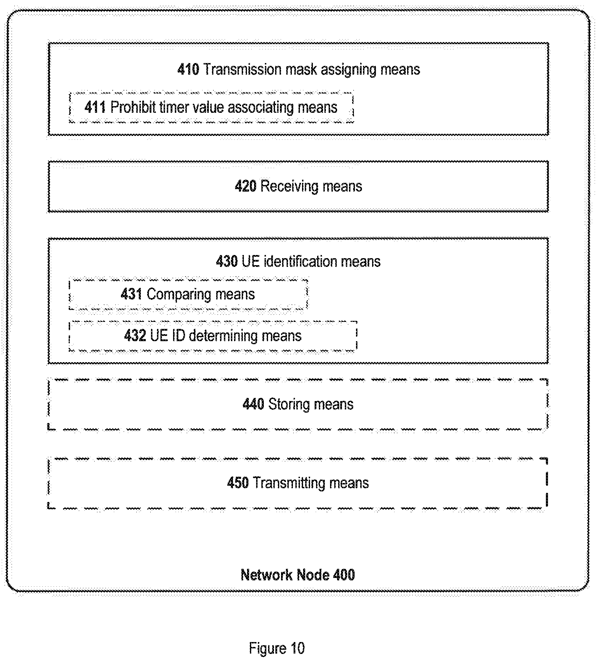

Figure 10 schematically illustrates a network node 400, e.g. a eNodeB, which is adapted to perform or otherwise execute the method described herein with reference to figures 1-8. The network node 400 is suitable for supporting the use of a single PUCCH resource to a plurality of communication devices such that the plurality of communication devices can share the single PUCCH resource. The network node 400 comprises means 410 adapted to assign a transmission mask to each of a plurality of communication devices such that different transmission masks are assigned to different communication devices. Each transmission mask indicates re-occurring transmission occasions at which each communication device is either allowed or disallowed to transmit SRs (e.g. D-SRs) to the network node. Thereby, a SR periodicity pattern may be defined for each one of the plurality communication devices. The network node also comprises means 420 adapted to receive a burst of SRs from at least one communication device. Furthermore, the network node 400 comprises means 430 adapted to identify the at least one communication device from which the burst of SRs was received by recognizing the SR periodicity pattern of the received burst of SRs.

In some embodiments, the network node 400 additionally comprises means 440 adapted to store a list of communication device identities and a respective SR periodicity pattern associated with each one of the communication device identities. The network node 400 may also comprise means 431 adapted to compare a SR periodicity pattern of the received burst of SRs with the stored SR periodicity patterns as well as means 432 adapted to determine the identity of the at least one communication device from which the burst of SRs was received in response to finding a match between the SR periodicity pattern of the received burst of SRs and one of the stored SR periodicity patterns. The latter two means 431, 432 may optionally be integral parts of the earlier-mentioned means 430 adapted to identify the at least one communication device from which the burst of SRs was received. However, in other embodiments each of or both of the latter two means 431, 432 may be provided as separate means.

The network may also comprise a means 411 adapted to associate a prohibit timer value to each one of the plurality of communication devices such that different prohibit timer values are associated with different communication devices. Each prohibit timer value indicates a duration of time at which each one of the plurality of communication devices is disallowed to transmit SRs. The means 411 may optionally be a part of the earlier-mentioned means 410 adapted to assign a transmission mask to each of a plurality of communication devices, as illustrated in figure 10. Alternatively, the means 411 may be provided as a separate means. The different prohibit timer values may for example *sr-ProhibitTimer* values.

Still further, the network node 400 may comprise means 450 adapted to transmit an UL grant to the identified at least one communication device from which the burst of SRs was received.

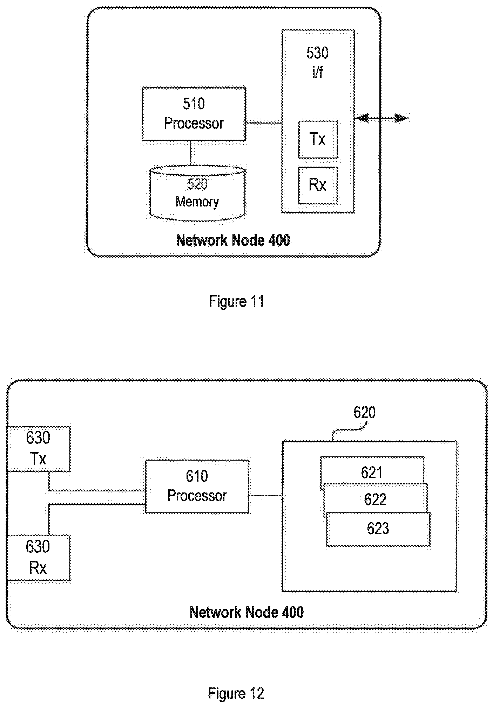

With reference to figure 11, an example implementation of the network node 400 will be described in further detail. In this example implementation, the network node 400 comprises a processor 510 and a memory 520. Also, a communications interface (i/f) 530 may be provided in order to allow the network node 400 to communicate with other apparatuses (e.g., other network nodes or communication devices), etc. To this end, the communications interface 530 may comprise a transmitter (Tx) and a receiver (Rx). Alternatively, the communications interface 530 may comprise a transceiver (Tx/Rx) combining both transmission and reception capabilities. The communications interface 530 may include a radio frequency (RF) interface allowing the network node 400 to communicate with other apparatuses etc through a radio frequency band through the use of different radio frequency technologies such as LTE, WCDMA, any other cellular network standardized by the 3rd Generation Partnership Project (3GPP), or any other wireless technology such as Wi-Fi, Bluetooth®, etcetera.

The memory 520 comprises instructions which are executable by the processor 510 whereby the network node 400 is operative to: assign a transmission mask to each of a plurality of communication devices such that different transmission masks are assigned to different communication devices, each transmission mask indicating re-occurring transmission occasions at which each communication device is either allowed or disallowed to transmit SRs to the network node, whereby a SR periodicity pattern is defined for each one of the plurality communication devices; receive by means of the receiver (Rx) a burst of SRs from at least one communication device; and identify the at least one communication device from which the burst of SRs was received by recognizing the SR periodicity pattern of the received burst of SRs. Furthermore, the memory 520 may comprise instructions which are executable by the processor 510 whereby the network node 400 is operative to transmit, by means of the transmitter (Tx), an UL grant to the identified at least one communication device from which the burst of SRs was received.

The memory 520 may optionally also comprise instructions which are executable by the processor 510 whereby the network node 400 is operative to: store, e.g. in another memory (not shown) a list of communication device identities and a SR periodicity pattern associated with each one of the communication device identities. Said another memory may be a memory of the network node 400. Alternatively, said another memory may be a remotely located memory which is accessible by the network node. Furthermore, the memory 520 may optionally also comprise instructions which are executable by the processor 510 whereby the network node 400 is operative to: compare the SR periodicity pattern of the received burst of SRs with the stored SR periodicity patterns, and determine the identity of the at least one communication device from which the burst of SRs was received in response to finding a match between the SR periodicity pattern of the received burst of SRs and one of the stored SR periodicity patterns.

Still further, the memory 520 may optionally also comprise instructions which are executable by the processor 510 whereby the network node 400 is operative to: associate a prohibit timer value to each one of the plurality of communication devices such that different prohibit timer values are associated with different communication devices, each prohibit timer value indicating a duration of time at which each one of the plurality of communication devices is disallowed to transmit SRs. The different prohibit timer values may for example be *sr-ProhibitTimer* values.

Figure 12 illustrates another example implementation of a network node 400, in accordance with one embodiment. In this example implementation, the network node comprises a processor 610 and one or several modules 620. Also, a communications interface may be provided in order to allow the network node 400 to communicate with other apparatuses, etc. To this end, the communications interface may comprise a transmitter (Tx) and a receiver (Rx). Alternatively, the communications interface may comprise a transceiver (Tx/Rx) combining both transmission and reception capabilities. Similar to the embodiment shown in figure 11, the communications interface may include a RF interface allowing the network node 400 to communicate with apparatuses etc through a radio frequency band through the use of different radio frequency technologies such as LTE, WCDMA, any other cellular network standardized by the 3rd Generation Partnership Project (3GPP), or any other wireless technology such as Wi-Fi, Bluetooth®, etcetera.

In one embodiment, a transmission mask assigning module 621 is provided for assigning a transmission mask to each of a plurality of communication devices such that different transmission masks are assigned to different communication devices. Each transmission mask is configured to indicate re-occurring transmission occasions at which each communication device is either allowed or disallowed to transmit SRs to the network node, whereby a SR periodicity pattern is defined for each one of the plurality communication devices. Furthermore, the receiver (Rx) 630 is configured to receive a burst of SRs from at least one communication device. Moreover, a UE identification module 622 is provided for identifying the at least one communication device from which the burst of SRs was received by recognizing the SR periodicity pattern of the received burst of SRs. Still further, the transmitter (Tx) 630 may be configured to transmit an UL grant to the identified at least one communication device from which the burst of SRs was received.

A storage module 623 may optionally be provided for storing a list of communication device identities and a SR periodicity pattern associated with each one of the communication device identities. Furthermore, the UE identification module 622 may be further configured to compare the SR periodicity pattern of the received burst of SRs with the stored SR periodicity patterns, and determine the identity of the at least one communication device from which the burst of SRs was received in response to finding a match between the SR periodicity pattern of the received burst of SRs and one of the stored SR periodicity patterns.

Also, in some embodiments the transmission mask assigning module 621 is further configured to associate a prohibit timer value to each one of the plurality of communication devices such that different prohibit timer values are associated with different communication devices, each prohibit timer value indicating a duration of time at which each one of the plurality of communication devices is disallowed to transmit SRs. The different prohibit timer values may for example be *sr-ProhibitTimer* values. The various embodiments described in this disclosure are advantageous since they allow for a way of identifying the communication devices when a single PUCCH resource is to be shared among a plurality of communication devices. When sharing a single PUCCH resource between two or more communication devices, this identification of the communication devices may in turn enable faster and/or more accurate grants of SRs for communication devices while maximizing the available user data traffic.

In the detailed description hereinabove, for purposes of explanation and not limitation, specific details are set forth in order to provide a thorough understanding of various embodiments described in this disclosure. In some instances, detailed descriptions of well-known devices, components, circuits, and methods have been omitted so as not to obscure the description of the embodiments disclosed herein with unnecessary detail. All statements herein reciting principles, aspects, and embodiments disclosed herein, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated that block diagrams herein can represent conceptual views of illustrative circuitry or other functional units embodying the principles of the described embodiments. Similarly, it will be appreciated that any flow charts and the like represent various processes which may be substantially represented in computer readable medium and so executed by a computer or processor, whether or not such computer or processor is explicitly shown. The functions of the various elements including functional blocks, may be provided through the use of hardware such as circuit hardware and/or hardware capable of executing software in the form of coded instructions stored on the above-mentioned computer readable medium. Thus, such functions and illustrated functional blocks are to be understood as being either hardware-implemented and/or computer-implemented, and thus machine-implemented. In terms of hardware implementation, the functional blocks may include or encompass, without limitation, digital signal processor (DSP) hardware, reduced instruction set processor, hardware (e.g., digital or analog) circuitry including but not limited to application specific integrated circuit(s) [ASIC], and/or field programmable gate array(s) (FPGA(s)), and (where appropriate) state machines capable of performing such functions. In terms of computer implementation, a computer is generally understood to comprise one or more processors or one or more controllers. When provided by a computer or processor or controller, the functions may be provided by a single dedicated computer or processor or controller, by a single shared computer or processor or controller, or by a plurality of individual computers or processors or controllers, some of which may be shared or distributed. Moreover, use of the term "processor" or "controller" may also be construed to refer to other hardware capable of performing such functions and/or executing software, such as the example hardware recited above.
Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A method (100) performed by a network node for using a single **P**hysical **U**plink **C**ontrol **C**hannel, PUCCH, resource to a plurality of communication devices such that the plurality of communication devices can share the single PUCCH resource, the method (100) comprising:
assigning (110) a transmission mask to each one of a plurality of communication devices such that different transmission masks are assigned to different communication devices, each transmission mask indicating re-occurring transmission time periods during which each communication device is either allowed or disallowed to transmit **S**cheduling **R**equests, SRs, to the network node, whereby a SR periodicity pattern is defined for each one of the plurality communication devices;
receiving (130) a burst of SRs from at least one communication device; and
identifying (140) the at least one communication device from which the burst of SRs was received by recognizing the SR periodicity pattern of the received burst of SRs.

2. The method (100) according claim 1, further comprising:
storing (120) a list of communication device identities and a SR periodicity pattern associated with each one of the communication device identities, and wherein
identifying (140) the at least one communication device from which the burst of SRs was received comprises:
comparing (141) the SR periodicity pattern of the received burst of SRs with the stored SR periodicity patterns, and
determining (142) the identity of the at least one communication device from which the burst of SRs was received in response to finding a match between the SR periodicity pattern of the received burst of SRs and one of the stored SR periodicity patterns.

3. The method (100) according to claim 1 or 2, wherein assigning (110) the transmission mask to each of the plurality of communication devices comprises:
associating (111) a prohibit timer value to each one of the plurality of communication devices such that different prohibit timer values are associated with different communication devices, each prohibit timer value indicating a duration of time at which each one of the plurality of communication devices is disallowed to transmit SRs.

4. The method (100) according to claim 3, wherein the different prohibit timer values are *sr-ProhibitTimer* values.

5. The method (100) according to any one of the claims 1-4, comprising:
transmitting (150) an uplink, UL, grant to the identified at least one communication device from which the burst of SRs was received.

6. Computer program (310), comprising instructions which, when executed on at least one processor, cause the at least one processor to carry out the method according to any one of claims 1-5.

7. A carrier comprising the computer program according to claim 6, wherein the carrier is one of an electronic signal, an optical signal, a radio signal, or a computer readable storage medium (300).

8. A network node (400) for using a single **P**hysical **U**plink **C**ontrol **Ch**annel, PUCCH, resource to a plurality of communication devices such that the plurality of communication devices can share the single PUCCH resource, the network node comprising:
means (410) adapted to assign a transmission mask to each one of a plurality of communication devices such that different transmission masks are assigned to different communication devices, each transmission mask indicating re-occurring transmission time periods during which each communication device is either allowed or disallowed to transmit **S**cheduling **R**equests, SRs, to the network node, whereby a SR periodicity pattern is defined for each one of the plurality communication devices;
means (420) adapted to receive a burst of SRs from at least one communication device; and
means (430) adapted to identify the at least one communication device from which the burst of SRs was received by recognizing the SR periodicity pattern of the received burst of SRs.

9. The network node (400) according claim 8, further comprising:
means (440) adapted to store a list of communication device identities and a respective SR periodicity pattern associated with each one of the communication device identities,
means (431) adapted to compare a SR periodicity pattern of the received burst of SRs with the stored SR periodicity patterns, and
means (432) adapted to determine the identity of the at least one communication device from which the burst of SRs was received in response to finding a match between the SR periodicity pattern of the received burst of SRs and one of the stored SR periodicity patterns.

10. The network node (400) according to claim 8 or 9, comprising:
means (411) adapted to associate a prohibit timer value to each one of the plurality of communication devices such that different prohibit timer values are associated with different communication devices, each prohibit timer value indicating a duration of time at which each one of the plurality of communication devices is disallowed to transmit SRs.

11. The network node (400) according to claim 10, wherein the different prohibit timer values are *sr-ProhibitTimer* values.

12. The network node (400) according to any one of the claims 8-11, comprising:
means (450) adapted to transmit an uplink, UL, grant to the identified at least one communication device from which the burst of SRs was received.

## Patentansprüche

1. Verfahren (100), das von einem Netzknoten zur Verwendung einer einzelnen **P**hysischen-**U**plink-**C**ontrol-**C**hannel-Ressource, PUCCH, an einer Vielzahl von Kommunikationsvorrichtungen durchgeführt wird, so dass sich die Vielzahl von Kommunikationsvorrichtungen die einzelne PUCCH-Quelle teilen können, wobei das Verfahren (100) Folgendes umfasst:
Zuweisen (110) einer Übertragungsmaske an jede einzelne von einer Vielzahl von Kommunikationsvorrichtungen, so dass unterschiedliche Übertragungsmasken an unterschiedliche Kommunikationsvorrichtungen zugewiesen werden, wobei jede Übertragungsmaske wiederauftretende Übertragungszeiträume angibt, während derer jede Kommunikationsvorrichtung entweder zugelassen oder gesperrt wird, Planungsanfragen ,SR, an den Netzwerkknoten zu übertragen, wobei ein SR-Periodizitätsmuster für jede einzelne von der Vielzahl der Kommunikationsvorrichtungen definiert ist;
Empfangen (130) eines Bursts von SRs von mindestens einer Kommunikationsvorrichtung; und
Identifizieren (140) der mindestens einen Kommunikationsvorrichtung, von der der Burst von SRs empfangen wurde, durch Erkennen des SR-Periodizitätsmusters des empfangenen Bursts von SRs.

2. Verfahren (100) nach Anspruch 1, ferner umfassend:
Speichern (120) einer Liste von Kommunikationsvorrichtungsidentitäten und eines SR-Periodizitätsmusters, das jeder der Kommunikationsvorrichtungsidentitäten zugeordnet ist, und wobei
Identifizieren (140) der mindestens einen Kommunikationsvorrichtung, von der der Burst von SRs empfangen wurde, umfasst:
Vergleichen (141) des SR-Periodizitätsmusters des empfangenen Bursts von SRs mit den gespeicherten SR-Periodizitätsmustern, und Bestimmen (142) der Identität der mindestens einen Kommunikationsvorrichtung, von der der Burst von SRs empfangen wurde, in Reaktion auf das Finden einer Übereinstimmung zwischen dem SR-Periodizitätsmuster des empfangenen Bursts von SRs und
einem der gespeicherten SR-Periodizitätsmuster.

3. Verfahren (100) nach Anspruch 1 oder 2, wobei Zuweisen (110) der Übertragungsmaske an jede einzelne der Vielzahl von Kommunikationsvorrichtungen Folgendes umfasst:
Zuordnen (111) eines Verhinderungszeitgeberwerts an jede einzelne der Vielzahl von Kommunikationsvorrichtungen derart, dass unterschiedliche Verhinderungszeitgeberwerte unterschiedlichen Kommunikationsvorrichtungen zugeordnet werden, wobei jeder Zeitgeberwert eine Zeitdauer angibt, zu der jede einzelne der Vielzahl von Kommunikationsvorrichtungen gesperrt ist, SRs zu übertragen.

4. Verfahren (100) nach Anspruch 3, wobei die unterschiedlichen Verhinderungszeitgeberwerte *sr-ProhibitTimer-Werte* sind.

5. Verfahren (100) nach einem der Ansprüche 1 bis 4, umfassend:
Übertragen (150) einer Uplink-Genehmigung, UL, an die identifizierte mindestens eine Kommunikationsvorrichtung, von der der Burst von SRs empfangen wurde.

6. Computerprogramm (310), das Anweisungen umfasst, die bei Ausführung auf mindestens einem Prozessor bewirken, dass der mindestens eine Prozessor das Verfahren nach einem der Ansprüche 1 bis 5 ausführt.

7. Träger, der das Computerprogramm nach Anspruch 6 umfasst, wobei der Träger einer von einem elektronischen Signal, einem optischen Signal, einem Funksignal oder einem computerlesbaren Speichermedium (300) ist.

8. Netzknoten (400) zur Verwendung einer einzelnen **P**hysischen-**U**plink-**C**ontrol-**C**hannel-Ressource, PUCCH, an einer Vielzahl von Kommunikationsvorrichtungen, so dass sich die Vielzahl von Kommunikationsvorrichtungen die einzelne PUCCH-Quelle teilen können, wobei der Netzknoten Folgendes umfasst:
Mittel (410), das dafür ausgelegt ist, eine Übertragungsmaske an jede einzelne einer Vielzahl von Kommunikationsvorrichtungen zuzuweisen derart, dass unterschiedliche Übertragungsmasken unterschiedlichen Kommunikationsvorrichtungen zugeordnet werden,
wobei jede Übertragungsmaske wiederauftretende Übertragungszeiträume angibt, während derer jede Kommunikationsvorrichtung entweder zugelassen oder gesperrt wird, Planungsanfragen, SR, an den Netzknoten zu übertragen,
wobei ein SR-Periodizitätsmuster für jede einzelne der Vielzahl der Kommunikationsvorrichtungen definiert ist;
Mittel (420), das dafür ausgelegt ist, einen Burst von SRs von mindestens einer Kommunikationsvorrichtung zu empfangen; und
Mittel (430), das dafür ausgelegt ist, die mindestens eine Kommunikationsvorrichtung zu identifizieren, von der der Burst von SRs empfangen wurde, indem sie das SR-Periodizitätsmuster des empfangenen Bursts von SRs erkennt.

9. Netzknoten (400) nach Anspruch 8, ferner umfassend:
Mittel (440), das dafür ausgelegt ist, eine Liste von Kommunikationsvorrichtungsidentitäten und ein jeweiliges SR-Periodizitätsmuster zu speichern, das jeder einzelnen der Kommunikationsvorrichtungsidentitäten zugeordnet ist,
Mittel (431), das dafür ausgelegt ist, ein SR-Periodizitätsmuster des empfangenen Bursts von SRs mit den gespeicherten SR-Periodizitätsmustern zu vergleichen, und
Mittel (432), das dafür ausgelegt ist, die Identität der mindestens einen Kommunikationsvorrichtung zu bestimmen, von der der Burst von SRs empfangen wurde als Reaktion auf das Finden einer Übereinstimmung zwischen dem SR-Periodizitätsmuster des empfangenen Bursts von SRs und einem der gespeicherten SR-Periodizitätsmuster.

10. Netzknoten (400) nach Anspruch 8 oder 9, der Folgendes umfasst:
Mittel (411), das dafür ausgelegt ist, jeder einzelnen der Vielzahl von Kommunikationsvorrichtungen einen Verhinderungszeitgeberwert zuzuordnen, so dass unterschiedliche Verhinderungszeitgeberwerte unterschiedlichen Kommunikationsvorrichtungen zugeordnet werden, wobei jeder Verhinderungszeitgeberwert eine Zeitdauer angibt, zu der jede einzelne der Vielzahl von Kommunikationsvorrichtungen gesperrt ist, SRs zu übertragen.

11. Netzknoten (400) nach Anspruch 10, wobei die unterschiedlichen Verhinderungszeitgeberwerte *sr-ProhibitTimer-Werte* sind.

12. Netzknoten (400) nach einem der Ansprüche 8 bis 11, der Folgendes umfasst:
Mittel (450), das dafür ausgelegt ist, eine Uplink-Genehmigung, UL, an die identifizierte mindestens eine Kommunikationsvorrichtung, von der der Burst von SRs empfangen wurde, zu übertragen.

## Revendications

1. Procédé (100) mis en oeuvre par un noeud de réseau pour utiliser une ressource de **C**anal de **C**ommande de **L**iaison montante **P**hysique, PUCCH, unique vers une pluralité de dispositifs de communication de telle sorte que la pluralité de dispositifs de communication peut partager la ressource PUCCH unique, le procédé (100) comprenant :
l'attribution (110) d'un masque de transmission à chacun d'une pluralité de dispositifs de communication de telle sorte que différents masques de transmission sont attribués à différents dispositifs de communication, chaque masque de transmission indiquant des laps de temps de transmission récurrents pendant lesquels chaque dispositif de communication est soit autorisé soit n'est pas autorisé à transmettre des **D**emandes de **P**lanification, SR, au noeud de réseau, moyennant quoi un motif de périodicité de SR est défini pour chacun parmi la pluralité de dispositifs de communication ;
la réception (130) d'une rafale de SR depuis au moins un dispositif de communication ; et
l'identification (140) de l'au moins un dispositif de communication depuis lequel la rafale de SR a été reçue en reconnaissant le motif de périodicité de SR de la rafale de SR reçue.

2. Procédé (100) selon la revendication 1, comprenant en outre :
le stockage (120) d'une liste d'identités de dispositif de communication et d'un motif de périodicité de SR associé à chacune des identités de dispositif de communication, et dans lequel
l'identification (140) de l'au moins un dispositif de communication depuis lequel la rafale de SR a été reçue comprend :
la comparaison (141) du motif de périodicité de SR de la rafale de SR reçue avec les motifs de périodicité de SR stockés, et
la détermination (142) de l'identité de l'au moins un dispositif de communication depuis lequel la rafale de SR a été reçue en réponse à la découverte d'une correspondance entre le motif de périodicité de SR de la rafale de SR reçue et l'un des motifs de périodicité de SR stockés.

3. Procédé (100) selon la revendication 1 ou 2, dans lequel l'attribution (110) du masque de transmission à chacun parmi la pluralité de dispositifs de communication comprend :
l'association (111) d'une valeur de temporisateur d'interdiction à chacun de la pluralité de dispositifs de communication de telle sorte que différentes valeurs de temporisateur d'interdiction sont associées à différents dispositifs de communication, chaque valeur de temporisateur d'interdiction indiquant une durée de temps pendant laquelle chacun de la pluralité de dispositifs de communication n'est pas autorisé à transmettre des SR.

4. Procédé (100) selon la revendication 3, dans lequel les différentes valeurs de temporisateur d'interdiction sont des valeurs *sr-ProhibitTimer.*

5. Procédé (100) selon l'une quelconque des revendications 1 à 4, comprenant :
la transmission (150) d'une autorisation de liaison montante, UL, à l'au moins un dispositif de communication identifié depuis lequel la rafale de SR a été reçue.

6. Programme informatique (310), comprenant des instructions qui, lorsqu'elles sont exécutées sur au moins un processeur, amènent l'au moins un processeur à effectuer le procédé selon l'une quelconque des revendications 1 à 5.

7. Support comprenant le programme informatique selon la revendication 6, dans lequel le support est l'un parmi un signal électronique, un signal optique, un signal radio, ou un support de stockage lisible par ordinateur (300).

8. Noeud de réseau (400) pour utiliser une ressource de **C**anal de **C**ommande de **L**iaison montante **P**hysique, PUCCH, unique vers une pluralité de dispositifs de communication de telle sorte que la pluralité de dispositifs de communication peut partager la ressource PUCCH unique, le noeud de réseau comprenant :
des moyens (410) conçus pour attribuer un masque de transmission à chacun d'une pluralité de dispositifs de communication de telle sorte que différents masques de transmission sont attribués à différents dispositifs de communication, chaque masque de transmission indiquant des laps de temps de transmission récurrents pendant lesquels chaque dispositif de communication est soit autorisé soit n'est pas autorisé à transmettre des **D**emandes de **P**lanification, SR, au noeud de réseau, moyennant quoi un motif de périodicité de SR est défini pour chacun parmi la pluralité de dispositifs de communication ;
des moyens (420) conçus pour recevoir une rafale de SR depuis au moins un dispositif de communication ; et
des moyens (430) conçus pour identifier l'au moins un dispositif de communication depuis lequel la rafale de SR a été reçue en reconnaissant le motif de périodicité de SR de la rafale de SR reçue.

9. Noeud de réseau (400) selon la revendication 8, comprenant en outre :
des moyens (440) conçus pour stocker une liste d'identités de dispositif de communication et un motif de périodicité de SR respectif associé à chacune des identités de dispositif de communication,
des moyens (431) conçus pour comparer un motif de périodicité de SR de la rafale de SR reçue avec les motifs de périodicité de SR stockés, et
des moyens (432) conçus pour déterminer l'identité de l'au moins un dispositif de communication depuis lequel la rafale de SR a été reçue en réponse à la découverte d'une correspondance entre le motif de périodicité de SR de la rafale de SR reçue et l'un des motifs de périodicité de SR stockés.

10. Noeud de réseau (400) selon la revendication 8 ou 9, comprenant :
des moyens (411) conçus pour associer une valeur de temporisateur d'interdiction à chacun de la pluralité de dispositifs de communication de telle sorte que différentes valeurs de temporisateur d'interdiction sont associées à différents dispositifs de communication, chaque valeur de temporisateur d'interdiction indiquant une durée de temps pendant laquelle chacun de la pluralité de dispositifs de communication n'est pas autorisé à transmettre des SR.

11. Noeud de réseau (400) selon la revendication 10, dans lequel les différentes valeurs de temporisateur d'interdiction sont des valeurs *sr-ProhibitTimer.*

12. Noeud de réseau (400) selon l'une quelconque des revendications 8 à 11, comprenant :
des moyens (450) conçus pour transmettre une autorisation de liaison montante, UL, à l'au moins un dispositif de communication identifié depuis lequel la rafale de SR a été reçue.
